# EUROPÄISCHE PATENTSCHRIFT

(11) **EP 2 622 311 B1**
(45) Veröffentlichungstag und Bekanntmachung des Hinweises auf die Patenterteilung: **08.11.2017**
(21) Anmeldenummer: 11763855.1
(22) Anmeldetag: 28.09.2011
(51) Int. Cl.: G01D 5/241

(54) **KAPAZITIVER DREHGEBER**
CAPACITIVE ROTARY TRANSDUCER
RÉSOLVEUR CAPACITIF

(30) Priorität: 28.09.2010 DE 102010046778
(43) Veröffentlichungstag der Anmeldung: 07.08.2013
(73) Patentinhaber: TRW Automotive Electronics & Components GmbH, 78315 Radolfzell (DE)
(72) Erfinder: BACKES, Ulrich, 78315 Radolfzell (DE); REISE, Wulf, 78462 Konstanz (DE)
(74) Vertreter: Prinz & Partner mbB
(86) Internationale Anmeldenummer: PCT/EP2011/004862
(87) Internationale Veröffentlichungsnummer: WO 2012/041498

(56) Entgegenhaltungen:
- EP-A2- 0 258 725
- WO-A1-2009/027504
- DE-A1-102009 044 618

## Beschreibung

Die Erfindung betrifft einen kapazitiven Drehgeber mit einem Stator und einem Rotor sowie mit am Stator auf einer mit der Rotorachse koaxialen Codierbahn fest angeordneten Statorelektroden und am Rotor angeordneten Koppelelektroden.

Unter einem Drehgeber wird in diesem Zusammenhang ein Drehwinkelgeber oder auch ein Winkelpositionsgeber verstanden. Typische Anwendungen von Drehgebern im Fahrzeug sind Lenkwinkelgeber und verschleißfreie Drehschalter.

Bekannt sind optische Encoder, die aufgrund der Verwendung von optoelektronischen Komponenten aufwendig sind. Ferner sind kapazitive Encoder mit analoger Codierung bekannt (US 5,736,865 A1), bei denen die Genauigkeit in hohem Maße von der Güte des Signalpfades abhängig ist. Bei einem weiteren bekannten kapazitiven Encoder mit Shield-Elektrode (US 6,892,590 B1) führt eine potentialmäßig schwimmende Koppelelektrode zu einer hohen Eigenkapazität, welche die Signalauswertung erschwert. Die Dokumente DE 10 2009 044 618 A1, WO 2009/027504 A1 und EP 0258725 A2 definieren weitere kapazitive Drehgeber.

Durch die vorliegende Erfindung wird ein kapazitiver Drehgeber geschaffen, der eine digitale Codierung mit mehreren Koppelelektroden abtastet, wodurch mittels Redundanz eine hohe Zuverlässigkeit erreicht wird. Das Konzept der Drehgebers ermöglicht eine Optimierung der Fläche der Koppelelektroden für eine hohe Koppelkapazität bei geringer Überlappung zu benachbarten Statorelektroden, sodass die Umladung der Elektroden und damit deren Abtastung in sehr kurzer Zeit erfolgen kann und überdies der Raumbedarf minimiert wird.

Bei dem erfindungsgemäßen Drehgeber werden die Koppelelektroden durch Drehung des Rotors in geringem axialen Abstand von der Codierbahn über die Statorelektroden geführt, wobei sie jeweils in Umfangsrichtung benachbarte Statorelektroden überdecken und kapazitiv miteinander koppeln. Eine Abfrageelektronik detektiert für jede der Statorelektroden eine durch eine Koppelelektrode des Rotors bewirkte kapazitive Kopplung mit einer benachbarten Statorelektrode. Dies ermöglicht die sichere Detektion der Winkelstellung des Rotors sowohl statisch als auch dynamisch. Der Drehgeber kann daher prinzipiell als Drehwinkelmelder, z.B. zur Lenkwinkelerfassung im Fahrzeug, wie auch als Winkelpositionsmelder z.B. in einem verschleißfreien Drehschalter eingesetzt werden. Die konkrete Ausführung der Statorelektroden und der Koppelelektroden erlaubt Kapazitäten im Bereich von etwa 1 pF bis etwa 10 pF. Diese Kapazitätswerte sind mit verfügbaren Microcontrollern direkt messbar, sodass Implementierungen auf geringstem Bauraum und zu geringen Herstellungskosten möglich sind. Dennoch erfüllt der Drehgeber höchste Ansprüche an Genauigkeit und Zuverlässigkeit.

Vorteilhafte Weiterbildungen des Drehgebers sind in den Patentansprüchen angegeben.

Weitere Merkmale und Vorteile der Erfindung ergeben sich aus der folgenden Beschreibung und aus den beigefügten Zeichnungen. In den Zeichnungen zeigen:
Fig. 1 eine schematische Gesamtansicht eines kapazitiven Drehgebers mit einer kreisförmigen Codierbahn;
Fig. 2 eine perspektivische Darstellung der Elektroden des Drehgebers nach Fig. 1;
Fig. 3 ein Diagramm zur Darstellung der Codierung des Drehgebers;
Fig. 4 eine schematische Gesamtansicht eines kapazitiven Drehgebers mit einer teilkreisförmigen Codierbahn;
Fig. 5 eine perspektivische Darstellung der Elektroden des Drehgebers nach Fig. 4;
Fig. 6 ein Diagramm zur Darstellung der Codierung des Drehgebers nach Fig. 4; und
Fig. 7 ein Blockdiagramm eines kapazitiven Drehgebers mit Auswerteelektronik.

Der kapazitive Drehgeber hat einen Stator und einen Rotor. Der Stator ist auf einer Leiterplatte 10 aufgebaut, die einen kreisrunden Durchgang 12 für die Achse 14 des Rotors aufweist. Auf einer kreisförmigen Codierbahn um den Durchgang 12 herum sind Statorelektroden 16a, 16b, 16c, ... angeordnet. Jede dieser Statorelektroden 16a, 16b, 16c, ... ist von einer benachbarten Statorelektrode durch einen schmalen Spalt getrennt und elektrisch von dieser isoliert. Alle Statorelektroden 16a, 16b, 16c, ... haben in Umfangsrichtung gleiche Länge und in Radialrichtung gleiche Breite. Der Rotor hat einen die Welle 14 koaxial umgebenden zylindrischen Rotorkörper 18, der auf seiner der Leiterplatte 10 zugewandten Stirnfläche mehrere Koppelelektroden 20a, 20b, 20c aufweist. Die Koppelelektroden 20a, 20b und 20c sind elektrisch voneinander isoliert und potenzialmäßig frei schwimmend in Gegenüberlage zu den Statorelektroden 16a, 16b, 16c, ... angeordnet. Die in Umfangsrichtung gemessene Länge der Koppelelektroden 20a, 20b, 20c ist etwa doppelt so groß wie die der Statorelektroden, sodass je eine Koppelelektrode zwei Statorelektroden überdecken kann. Die Koppelelektroden haben einen geringen axialen Abstand von den Statorelektroden, der durch eine dünne Gleitscheibe 22 aus dielektrischem Material definiert ist.

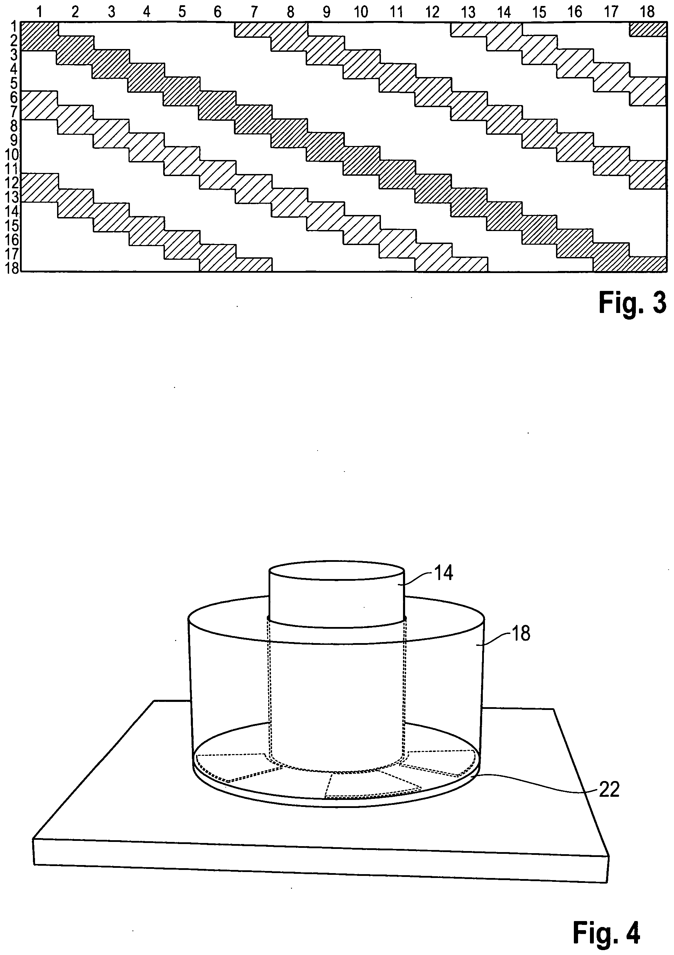

Bei der gezeigten Ausführungsform sind insgesamt achtzehn Statorelektroden und drei Koppelelektroden vorhanden. Die Koppelelektroden haben in Umfangsrichtung verschiedene Abstände voneinander. Die Abstände sind ein Mehrfaches der Teilung der Statorelektroden auf der Codierbahn. Der Abstand zwischen den Koppelelektroden 20a und 20b beträgt drei Teilungsschritte, der Abstand zwischen den Koppelelektroden 20b und 20c beträgt vier Teilungsschritte, und der Abstand zwischen den Koppelelektroden 20c und 20a beträgt fünf Teilungsschritte. Aus dieser Anordnung von Statorelektroden und Koppelelektroden ergibt sich die in Figur 3 dargestellte Codierung des Drehgebers. In Figur 3 sind in der Senkrechten die Nummern der Statorelektroden von 1 bis 18 angegeben. In der Waagerechten sind die entsprechenden Winkelpositionen mit den Nummern 1 bis 18 angegeben. Die Überdeckung zweier Statorelektroden mit einer Koppelelektrode ist in dem Diagramm jeweils durch ein ausgefülltes Rechteck dargestellt. Die ausgefüllten Rechtecke liegen jeweils auf einer im Diagramm von links oben nach rechts unten verlaufenden Linie, wobei sich durch die drei Koppelelektroden im Verlauf der Drehung über 360° mehrere derartige Linien ergeben, die verschiedene Abstände voneinander haben. Betrachtet man im Diagramm der Figur 3 beispielshalber die Winkelposition Nummer 1, so sind in dieser Position jeweils zwei benachbarte Statorelektroden durch eine gegenüberliegende Koppelelektrode kapazitiv gekoppelt, nämlich die Statorelektroden mit den Nummern 1, 2, die Statorelektroden mit den Nummern 6, 7 und die Statorelektroden mit den Nummern 12, 13. Bei Drehung des Rotors um eine Winkelposition verschieben sich die Nummern der miteinander gekoppelten Statorelektroden jeweils um ein Inkrement. Es liegen somit für jede der 18 Winkelpositionen drei redundante Informationen vor, von denen jede für sich ausreicht, um die aktuelle Winkelposition genau zu bestimmen.

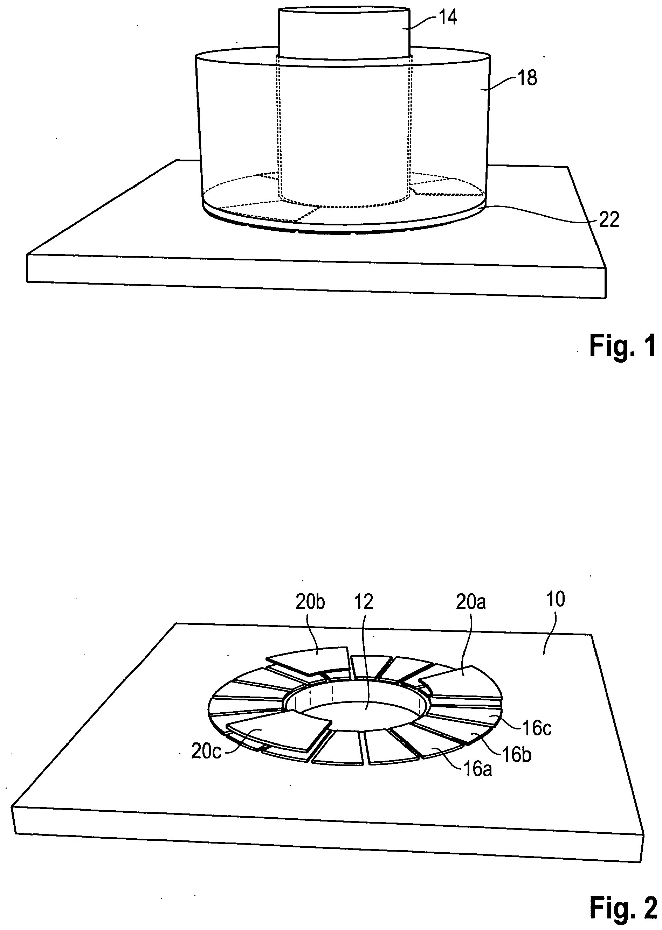

Die in den Figuren 4 bis 6 dargestellte Ausführung des Drehgebers unterscheidet sich von der nach den Figuren 1 bis 3 nur in der Anordnung von Statorelektroden und Koppelelektroden entsprechend einer Codierbahn, die auf einem Teilkreis von etwa 180° Erstreckung liegt. Auf der Codierbahn sind insgesamt neun Statorelektroden in gleichen Winkelabständen angeordnet, denen drei Koppelelektroden am Rotor gegenüberliegen. Der Abstand zwischen den Koppelelektroden 20a und 20b beträgt zwei Teilungsschritte und der Abstand zwischen den Koppelelektroden 20b und 20c nur einen Teilungsschritt der Statorelektroden. Ansonsten ist die Ausbildung des Drehgebers die gleiche wie bei der Ausführungsform nach den Figuren 1 bis 3 und wird daher nicht erneut beschrieben.

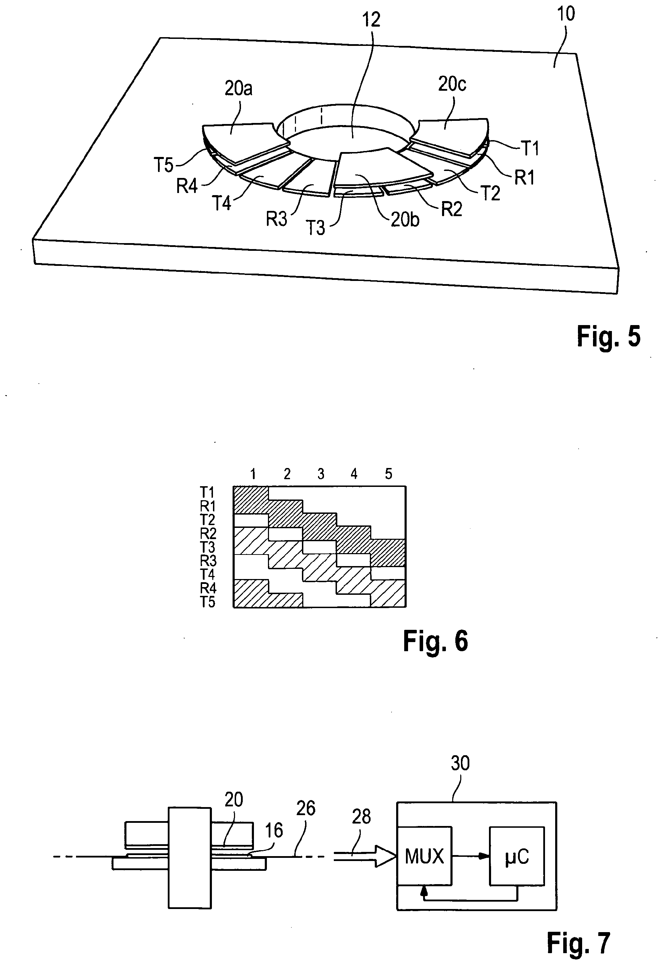

Die Codierung des Drehgebers nach den Figuren 4 und 5 ist in Figur 6 dargestellt. Es sind fünf diskrete Winkelpositionen zu unterscheiden. Jede dieser Winkelpositionen entspricht einer Schaltstellung eines verschleißfreien Drehschalters. Beispielsweise sind in der Winkelposition mit der Nummer 1 die Statorelektroden T1 und R1 durch die Koppelelektrode 20c kapazitiv gekoppelt, die Statorelektroden R2 und T3 durch die Koppelelektrode 20b und die Statorelektroden R4 und T5 durch die Koppelelektrode 20a. Auch bei dieser Ausführungsform liegen drei redundante Informationen über die aktuelle Winkelposition vor.

Die Überdeckung zweier benachbarter Statorelektroden mit einer Koppelelektrode kann durch Kapazitätsmessung detektiert werden. Die Messungen werden für alle Statorelektroden zyklisch in schneller Folge wiederholt, sodass die aktuelle Winkelposition jederzeit genau bestimmt werden kann. Konkret kann die Messung durchgeführt werden, indem jeweils in eine Statorelektrode eine Ladung eingespeist und die Ladung in der benachbarten Statorelektrode gemessen wird. In Fig. 6 bezeichnet z.B. T1 eine Sendeelektrode und R1 eine Empfangselektrode. Verfahren zur Kapazitätsmessung an Elektroden sind beispielshalber aus der US 2010/0181180 A1 bekannt.

Ein Drehgebersystem mit Auswerteelektronik ist in Fig. 7 schematisch gezeigt. Die Statorelektroden 16 sind über Leiter 26, die zu einem Bus 28 zusammengefasst sind, mit den Eingängen eines Multiplexers MUX in der Auswerteelektronik 30 verbunden. Ein Mikrocontroller µC steuert den Multiplexer MUX und wertet dessen Ausgangssignal aus. Die Koppelelektroden 20 am Rotor des Drehgebers sind potentialmäßig frei schwimmend und voneinander isoliert.

Die gezeigten Ausführungsformen sind beispielhaft. Bei praktischen Implementierungen kann die Anzahl der Statorelektroden dem jeweiligen Bedarf nach Auflösung der Winkelschritte leicht angepasst werden. Die Flächeninhalte der Elektroden werden möglichst klein gewählt, um eine kompakte Baugröße zu erreichen, aber groß genug, um gut messbare Kapazitätswerte zu erhalten. Vorteilhaft sind Kapazitätswerte im Bereich von etwa 1 pF bis etwa 10 pF, da sie mit verfügbaren kostengünstigen Mikrokontrollern direkt gemessen werden können.

## Patentansprüche

1. Kapazitiver Drehgeber mit einem Stator und einem Rotor sowie mit am Stator auf einer mit der Rotorachse koaxialen Codierbahn fest angeordneten Statorelektroden (16a, 16b, 16c), wobei jede dieser Statorelektroden von einer benachbarten Statorelektrode elektrisch isoliert ist, und am Rotor angeordneten und elektrisch voneinander isolierten Koppelelektroden (20a, 20b, 20c), wobei die Koppelelektroden bei Drehung des Rotors in geringem axialen Abstand von der Codierbahn über die Statorelektroden geführt werden und jeweils in Umfangsrichtung benachbarte Statorelektroden überdecken und kapazitiv miteinander koppeln; und mit einer Abfrageelektronik (30), die für jede der Statorelektroden (16a, 16b, 16c) eine durch eine Koppelelektrode (20a, 20b, 20c) des Rotors bewirkte kapazitive Kopplung mit einer benachbarten Statorelektrode (16a, 16b, 16c) detektiert.

2. Drehgeber nach Anspruch 1, bei dem die Statorelektroden (16a, 16b, 16c) entlang der Codierbahn in gleichen Winkelabständen angeordnet sind.

3. Drehgeber nach Anspruch 1 oder 2, bei dem die Koppelelektroden (20a, 20b, 20c) eine in Umfangsrichtung gemessene Länge haben, die etwa der Umfangslänge zweier benachbarter Statorelektroden (16a, 16b, 16c) entspricht.

4. Drehgeber nach einem der Ansprüche 1 bis 3, bei dem die Statorelektroden (16a, 16b, 16c) auf einer Leiterplatte (10) angeordnet sind.

5. Drehgeber nach einem der Ansprüche 1 bis 4, bei dem ein Gleitring aus dielektrischem Material zwischen den Statorelektroden (16a, 16b, 16c) und den Koppelelektroden (20a, 20b, 20c) angeordnet ist.

6. Drehgeber nach einem der Ansprüche 1 bis 5, bei dem die Koppelelektroden (20a, 20b, 20c) in Umfangsrichtung verschiedene Abstände voneinander haben.

7. Drehgeber nach einem der Ansprüche 1 bis 6, bei dem die Umfangspositionen der Statorelektroden (16a, 16b, 16c) und der Koppelelektroden (20a, 20b, 20c) dieselbe Teilung haben.

8. Drehgeber nach einem der Ansprüche 1 bis 7, bei dem die Codierbahn einen geschlossenen Kreis bildet.

9. Drehgeber nach einem der Ansprüche 1 bis 7, bei dem die Codierbahn einen Kreissektor bildet, auf dem Statorelektroden (16a, 16b, 16c) in Winkelpositionen entsprechend diskreten Schaltpositionen angeordnet sind.

10. Drehgeber nach einem der Ansprüche 1 bis 9, bei dem die Abfrageelektronik (30) aus mit mehreren Paaren von mit jeweils einer Koppelelektrode (20a, 20b, 20c) überdeckten Statorelektroden (16a, 16b, 16c) redundante Winkelpositionssignale ableitet.

## Claims

1. A capacitive rotary encoder comprising a stator and a rotor as well as stator electrodes (16a, 16b, 16c) firmly arranged on the stator on a coding path coaxial with the rotor axis, wherein each of these stator electrodes is electrically isolated from an adjacent stator electrode, and coupling electrodes (20a, 20b, 20c) arranged on the rotor and electrically isolated from each other, wherein during a rotation of the rotor the coupling electrodes are guided over the stator electrodes at a small axial distance from the coding path and each overlap stator electrodes adjacent in circumferential direction and capacitively couple the same with each other; and comprising an electronic interrogation system (30) which for each of the stator electrodes (16a, 16b, 16c) detects a capacitive coupling with an adjacent stator electrode (16a, 16b, 16c), which is effected by a coupling electrode (20a, 20b, 20c) of the rotor.

2. The rotary encoder according to claim 1, in which the stator electrodes (16a, 16b, 16c) are arranged at equal angular distances along the coding path.

3. The rotary encoder according to claim 1 or 2, in which the coupling electrodes (20a, 20b, 20c) have a length measured in circumferential direction, which approximately corresponds to the circumferential length of two adjacent stator electrodes (16a, 16b, 16c).

4. The rotary encoder according to any of claims 1 to 3, in which the stator electrodes (16a, 16b, 16c) are arranged on a printed circuit board (10).

5. The rotary encoder according to any of claims 1 to 4, in which a sliding ring of dielectric material is arranged between the stator electrodes (16a, 16b, 16c) and the coupling electrodes (20a, 20b, 20c).

6. The rotary encoder according to any of claims 1 to 5, in which the coupling electrodes (20a, 20b, 20c) have various distances from each other in circumferential direction.

7. The rotary encoder according to any of claims 1 to 6, in which the circumferential positions of the stator electrodes (16a, 16b, 16c) and of the coupling electrodes (20a, 20b, 20c) have the same pitch.

8. The rotary encoder according to any of claims 1 to 7, in which the coding path forms a closed circle.

9. The rotary encoder according to any of claims 1 to 7, in which the coding path forms a sector of a circle on which stator electrodes (16a, 16b, 16c) are arranged at angular positions corresponding to discrete switching positions.

10. The rotary encoder according to any of claims 1 to 9, in which the electronic interrogation system (30) derives redundant angular position signals from several pairs of stator electrodes (16a, 16b, 16c) each overlapped with one coupling electrode (20a, 20b, 20c) each.

## Revendications

1. Encodeur rotatif capacitif, comportant un stator et un rotor ainsi que des électrodes de stator (16a, 16b, 16c) qui sont agencées de manière stationnaire sur le stator sur une piste de codage coaxiale par rapport à l'axe du rotor, chacune de ces électrodes de stator étant électriquement isolée d'une électrode de stator adjacente, et des électrodes de couplage (20a, 20b, 20c) qui sont électriquement isolées les unes des autres et sont agencées sur le rotor, les électrodes de couplage étant guidées sur les électrodes de stator à une faible distance axiale de la piste de codage lors de la rotation du rotor, recouvrant chacune des électrodes de stator adjacentes dans le sens circonférentiel et couplant celles-ci les unes aux autres de manière capacitive ; et comprenant une électronique d'interrogation (30) qui détecte pour chacune des électrodes de stator (16a, 16b, 16c) un couplage capacitif avec une électrode de stator (16a, 16b, 16c) adjacente causé par une électrode de couplage (20a, 20b, 20c) du rotor.

2. Encodeur rotatif selon la revendication 1, dans lequel les électrodes de stator (16a, 16b, 16c) sont agencées à distances angulaires égales le long de la piste de codage.

3. Encodeur rotatif selon la revendication 1 ou 2, dans lequel les électrodes de couplage (20a, 20b, 20c) ont une longueur telle que mesurée dans le sens circonférentiel qui correspond approximativement à la longueur circonférentielle de deux électrodes de stator (16a, 16b, 16c) adjacentes.

4. Encodeur rotatif selon l'une des revendications 1 à 3, dans lequel les électrodes de stator (16a, 16b, 16c) sont agencées sur une carte de circuits imprimés (10).

5. Encodeur rotatif selon l'une des revendications 1 à 4, dans lequel un anneau de glissement en matière diélectrique est agencé entre les électrodes de stator (16a, 16b, 16c) et les électrodes de couplage (20a, 20b, 20c).

6. Encodeur rotatif selon l'une des revendications 1 à 5, dans lequel les électrodes de couplage (20a, 20b, 20c) ont différentes distances les unes des autres dans le sens circonférentiel.

7. Encodeur rotatif selon l'une des revendications 1 à 6, dans lequel les positions circonférentielles des électrodes de stator (16a, 16b, 16c) et des électrodes de couplage (20a, 20b, 20c) ont le même pas.

8. Encodeur rotatif selon l'une des revendications 1 à 7, dans lequel la piste de codage forme un cercle fermé.

9. Encodeur rotatif selon l'une des revendications 1 à 7, dans lequel la piste de codage forme un secteur de cercle sur lequel des électrodes de stator (16a, 16b, 16c) sont agencées dans des positions angulaires correspondant à des positions de commutation discrètes.

10. Encodeur rotatif selon l'une des revendications 1 à 9, dans lequel l'électronique d'interrogation (30) déduit des signaux redondants de position angulaire à partir de plusieurs paires d'électrodes de stator (16a, 16b, 16c) chacune recouverte d'une électrode de couplage (20a, 20b, 20c).
